# EUROPEAN PATENT APPLICATION

(11) **EP 4 192 184 A1**
(43) Date of publication of application: **07.06.2023**
(21) Application number: 21855398.0
(22) Date of filing: 02.08.2021
(51) Int. Cl.: H04W 76/10

(54) **PDU SESSION ESTABLISHMENT METHOD, TERMINAL DEVICE, AND CHIP SYSTEM**

(30) Priority: 13.08.2020 CN 202010813681
(71) Applicant: Huawei Technologies Co., Ltd., Shenzhen, Guangdong 518129 (CN)
(72) Inventor: LIU, Binjun, Shenzhen, Guangdong 518129 (CN); YU, Xiaoliang, Shenzhen, Guangdong 518129 (CN); FAN, Yuwei, Shenzhen, Guangdong 518129 (CN); LIAN, Hai, Shenzhen, Guangdong 518129 (CN)
(74) Representative: Gill Jennings & Every LLP
(86) International application number: PCT/CN2021/110029
(87) International publication number: WO 2022/033345

(57) **Abstract**

This application relates to the field of communications technologies, and provides a PDU session establishment method, a terminal device, and a chip system. The method is applied to a terminal device. The terminal device includes an application processor and a baseband processor. The baseband processor stores a URSP list, and the URSP list includes at least one URSP. The method includes: The application processor obtains a first data packet of an application, adds identification information of the application to the first data packet to form a second data packet, and sends the second data packet to the baseband processor. The baseband processor searches the URSP list for a URSP corresponding to the identification information, determines a PDU session activation parameter based on the URSP, and establishes a PDU session based on the PDU session activation parameter, where the PDU session is used to transmit the second data packet. According to the PDU session establishment method provided in this embodiment, a baseband processor can perform URSP matching selection and establish a PDU session, to provide a data transmission channel for an application and an application server.

## Description

This application claims priority to Chinese Patent Application No. 202010813681.9, filed with the China National Intellectual Property Administration on August 13, 2020 and entitled "PDU SESSION ESTABLISHMENT METHOD, TERMINAL DEVICE, AND CHIP SYSTEM", which is incorporated herein by reference in its entirety.

### TECHNICAL FIELD

This application relates to the field of communications technologies, and in particular, to a PDU session establishment method, a terminal device, and a chip system.

### BACKGROUND

A 5th generation mobile communications system (5G communications system for short) includes a plurality of network slices (network slices, NSs), and the network slices may simultaneously provide different service bearer capabilities for different applications, to improve flexibility and service adaptability of the 5G communications system.

An application is usually installed on a terminal device. A data transmission channel is required for communication between the application and an application server, and the 5G communications system supports a protocol data unit (protocol data unit, PDU) connection service. Therefore, a PDU session may be established between the terminal device and a network slice, to serve as the data transmission channel between the application and the application server.

### SUMMARY

This application provides a PDU session establishment method, a terminal device, and a chip system. A baseband processor is configured to perform URSP matching selection and establish a PDU session, to provide a data transmission channel for an application and an application server.

To achieve the foregoing objectives, the following technical solutions are used in this application.

According to a first aspect, an embodiment of this application provides a PDU session establishment method, applied to a terminal device. The terminal device includes an application processor and a baseband processor, the baseband processor stores a URSP list, and the URSP list includes at least one URSP. The method includes:

The application processor obtains a first data packet of an application, adds identification information of the application to the first data packet to form a second data packet, and sends the second data packet to the baseband processor.

The baseband processor searches the URSP list for a URSP corresponding to the identification information, determines a PDU session activation parameter based on the URSP corresponding to the identification information, and establishes a PDU session based on the PDU session activation parameter, where the PDU session is used to transmit the second data packet.

The first data packet sent by the application to the application processor usually first reaches the baseband processor through the application processor, then is sent by the baseband processor to a core network device, and finally is sent by the core network device to an application server. Because the first data packet sent by the application may not include the identification information of the application, the baseband processor may not, based on the identification information of the application, be able to perform URSP matching selection and establish the PDU session.

However, in this embodiment, the application processor first adds the identification information of the application to each first data packet of the application to form the second data packet, and then sends the second data packet to the baseband processor. Then, the baseband processor can obtain the identification information of the application, determine a corresponding URSP from the URSP list based on the identification information, and establish the PDU session based on the URSP. Therefore, in the PDU session establishment method provided in this embodiment, the baseband processor may perform URSP matching selection and establish the PDU session, to provide a data transmission channel for the application and the application server.

In some embodiments, the identification information is an application identification App ID or a user identification UID. The App ID is used to uniquely identify the application, and the UID is used to uniquely identify a user account of the application.

In some embodiments, if the identification information is the App ID, that the baseband processor searches the URSP list for a URSP corresponding to the identification information includes: The baseband processor searches the URSP list for a URSP corresponding to the App ID.

According to the PDU session establishment method provided in this embodiment, the baseband processor can determine an App ID of a second data packet to be transmitted, and perform URSP matching selection and establish the PDU session based on the App ID, to provide a data transmission channel for the application and the application server.

In some embodiments, if the identification information is the UID, that the baseband processor searches the URSP list for a URSP corresponding to the identification information includes: The baseband processor determines, based on a preset correspondence table, an App ID corresponding to the UID, where the correspondence table includes a correspondence between the UID and the App ID; and searches the URSP list for a URSP corresponding to the App ID.

According to the PDU session establishment method provided in this embodiment, the baseband processor can determine a UID of a second data packet to be transmitted, and perform URSP matching selection and establish the PDU session based on the UID, to provide a data transmission channel for the application and the application server.

In some embodiments, that the application processor adds identification information of the application to the first data packet to form a second data packet includes: The application processor adds the identification information of the application to an unoccupied field at an Ethernet header or an Ethernet trailer of the first data packet, to form the second data packet.

The identification information is added to the unoccupied field at the Ethernet header or the Ethernet trailer of the first data packet, so that the application processor is prevented from adding a new field to the first data packet, to help save resources.

In some embodiments, before that the application processor obtains a first data packet of an application, the method further includes: The baseband processor sends a registration request to a core network device; receives a registration accept message sent by the core network device, where the registration accept message carries network slice selection assistance information (allowed NSSAI) that the core network device allows the terminal device to use; and stores the allowed NSSAI.

It may be understood that, after the baseband processor registers with the core network and locally stores the allowed NSSAI, in a process of determining the PDU session activation parameter based on the URSP, the baseband processor can select, based on the allowed NSSAI, valid S-NSSAI in the URSP to establish the PDU session.

In some embodiments, after that the baseband processor stores the allowed NSSAI, and before that the application processor obtains a first data packet sent by an application, the method further includes: The baseband processor receives a terminal device management command sent by the core network device, where the command carries at least one URSP; stores the at least one URSP to form a URSP list; and sends a terminal device management complete message to the core network device, where the message is used to indicate that the baseband processor has processed the terminal device management command.

It may be understood that, only after locally storing the URSP list, the baseband processor can locally perform a URSP matching policy based on the identification information of the application and the URSP list, to establish the PDU session.

In some embodiments, the PDU session activation parameter includes single network slice selection assistance information S-NSSAI, a data network name DNN, and a protocol type, and the S-NSSAI is included in allowed network slice selection assistance information (allowed NSSAI).

In some embodiments, the method further includes: The baseband processor receives a configuration update command sent by the core network device, where the configuration update command carries a first URSP and a second URSP, and the second URSP is an updated URSP of the first URSP; and replaces the first URSP in the URSP list with the second URSP based on the configuration update command.

In this method, an invalid URSP in the URSP list may be updated, to avoid a network exception in a running process of an application to some extent.

In some embodiments, that the baseband processor establishes a PDU session based on the PDU session activation parameter includes: The baseband processor determines an established PDU session; and if the established PDU session does not include the PDU session established based on the PDU session activation parameter, the baseband processor establishes the PDU session based on the PDU session activation parameter. This method can avoid a problem of resource waste caused by repeatedly establishing a PDU session based on a same PDU session activation parameter by the baseband processor to some extent.

In some embodiments, the baseband processor is a modem.

According to a second aspect, an embodiment of this application provides a terminal device. The terminal device includes an application processor and a baseband processor. The baseband processor stores a UE route selection policy URSP list, and the URSP list includes at least one URSP.

The application processor is configured to: obtain a first data packet of an application; add identification information of the application to the first data packet to form a second data packet; and send the second data packet to the baseband processor.

The baseband processor is configured to: search the URSP list for a URSP corresponding to the identification information; determine a PDU session activation parameter based on the URSP corresponding to the identification information; and establish a PDU session based on the PDU session activation parameter, where the PDU session is used to transmit the second data packet.

In some embodiments, the identification information is an application identification App ID or a user identification UID.

In some embodiments, if the identification information is the App ID, that the baseband processor searches the URSP list for a URSP corresponding to the identification information includes: The baseband processor searches the URSP list for a URSP corresponding to the App ID.

In some embodiments, if the identification information is the UID, that the baseband processor searches the URSP list for a URSP corresponding to the identification information includes: The baseband processor determines, based on a preset correspondence table, an App ID corresponding to the UID, where the correspondence table includes a correspondence between the UID and the App ID; and the baseband processor searches the URSP list for a URSP corresponding to the App ID.

In some embodiments, that the application processor adds identification information of the application to the first data packet to form a second data packet specifically includes:
The application processor adds the identification information of the application to an unoccupied field at an Ethernet header or an Ethernet trailer of the first data packet, to form the second data packet.

In some embodiments, before that the application processor obtains a first data packet of an application, the baseband processor is further configured to: send a registration request to a core network device; receive a registration accept message sent by the core network device, where the registration accept message carries network slice selection assistance information (allowed NSSAI) that the core network device allows the terminal device to use; and store the allowed NSSAI.

In some embodiments, after that the baseband processor stores the allowed NSSAI, and before that the application processor obtains a first data packet sent by an application, the baseband processor is further configured to: receive a terminal device management command sent by the core network device, where the command carries at least one URSP; store the at least one URSP to form a URSP list; and send a terminal device management complete message to the core network device, where the message is used to indicate that the baseband processor has processed the terminal device management command.

In some embodiments, the PDU session activation parameter includes single network slice selection assistance information S-NSSAI, a data network name DNN, and a protocol type, and the S-NSSAI is included in allowed network slice selection assistance information (allowed NSSAI).

In some embodiments, the baseband processor is further configured to: receive a configuration update command sent by the core network device, where the configuration update command carries a first URSP and a second URSP, and the second URSP is an updated URSP of the first URSP; and replace the first URSP in the URSP list with the second URSP based on the configuration update command.

In some embodiments, that the baseband processor establishes a PDU session based on the PDU session activation parameter includes: The baseband processor determines an established PDU session; and if the established PDU session does not include the PDU session established based on the PDU session activation parameter, the baseband processor establishes the PDU session based on the PDU session activation parameter.

In some embodiments, the baseband processor is a modem.

According to a third aspect, an embodiment of this application provides a chip system, including a memory, an application processor and a baseband processor that are coupled to the memory. The application processor and the baseband processor execute a computer program stored in the memory, to implement the PDU session establishment method according to the foregoing first aspect.

According to a fourth aspect, an embodiment of this application provides a computer-readable storage medium. The computer-readable storage medium stores a computer program. When the computer program is executed by an application processor and a baseband processor, the PDU session establishment method according to the foregoing first aspect is implemented.

According to a fifth aspect, an embodiment of this application provides a computer program product. When the computer program product runs on a terminal device, the terminal device is enabled to perform the PDU session establishment method according to the foregoing first aspect.

It may be understood that, for beneficial effects of the foregoing second aspect to the fifth aspect, refer to related descriptions in the foregoing first aspect. Details are not described herein again.

### BRIEF DESCRIPTION OF DRAWINGS

FIG. 1 is a schematic block diagram of an architecture of a 5G communications system according to an embodiment of this application;
FIG. 2 is a schematic diagram of an application scenario for a network slice according to an embodiment of this application;
FIG. 3 is a schematic diagram of a structure of a terminal device according to an embodiment of this application;
FIG. 4 is a schematic flowchart of a first phase of establishing a PDU session according to an embodiment of this application;
FIG. 5 is a schematic flowchart of a second phase of establishing a PDU session according to an embodiment of this application;
FIG. 6 is a schematic flowchart of a URSP matching policy according to an embodiment of this application;
FIG. 7 is a schematic flowchart of a first phase of establishing a PDU session according to another embodiment of this application;
FIG. 8 is a schematic flowchart of a PDU session establishment method according to another embodiment of this application;
FIG. 9 is a schematic diagram of a structure of a data packet according to an embodiment of this application;
FIG. 10 is a schematic flowchart of a second phase of establishing a PDU session according to still another embodiment of this application; and
FIG. 11 is a schematic flowchart of a second phase of establishing a PDU session according to some other embodiments of this application.

### DESCRIPTION OF EMBODIMENTS

Embodiments of this application provide a PDU session establishment method. The method is applicable to a 5G communications system, a communications system above 5G, a future evolved public land mobile network (public land mobile network, PLMN), and a subsequent communications system that supports a 3rd generation partnership project (3rd generation partnership project, 3GPP) protocol version. This is not limited in embodiments of this application.

The following describes the PDU session establishment method provided in embodiments of this application by using the 5G communications system as an example.

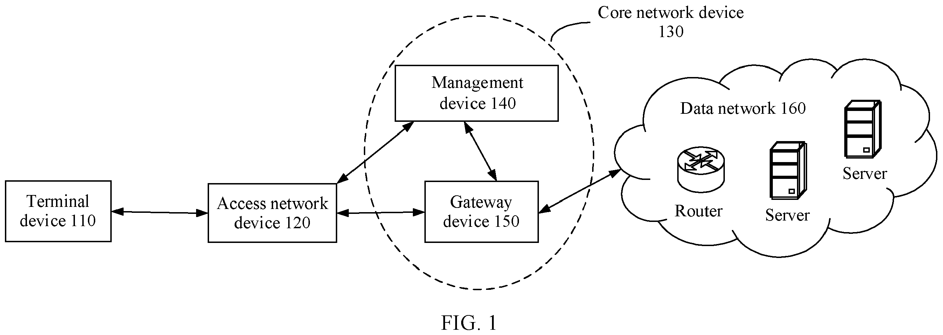

FIG. 1 is a schematic block diagram of an architecture of the 5G communications system according to an embodiment of this application. As shown in FIG. 1, the 5G communications system includes a terminal device 110, an access network device 120, a core network device 130, and a data network (data network, DN) 160.

The terminal device 110 may be connected, through a radio air interface, to the access network device 120 deployed by an operator, and then connected to the data network 160 by using the core network device 130. In this embodiment, the terminal device 110 may be user equipment (user equipment, UE), for example, a smartphone, a tablet computer, a notebook computer, an intelligent wearable device, or a personal digital assistant (personal digital assistant, PDA).

The access network device 120 is mainly configured to implement functions such as a radio physical layer function, resource scheduling and radio resource management, radio access control, and mobility management. In this embodiment, the access network device may be an access network (access network, AN) device or a radio access network (radio access network, RAN) device.

The core network device 130 includes a management device 140 and a gateway device 150. The management device 140 may include functional units such as an access and mobility management function (access & mobility function, AMF), a session management function (session management function, SMF), and a policy control function (policy control function, PCF). These functional units may work independently or may be combined to implement some control functions. For example, the AMF, the SMF, and the PCF may work together to complete access control and mobility management functions such as access authentication, security encryption, and location registration of a terminal device, session management functions such as establishment, release, and change of a user plane transmission path, and functions of analyzing some data related to a network slice and data related to a terminal device. The gateway device 150 is mainly configured to establish a channel with a terminal device, and forward a data packet between the terminal device and an external data network on the channel.

The data network 160 may correspond to a plurality of different service domains, for example, an IP multimedia subsystem (IP multimedia subsystem, IMS), an internet (Internet), and a service domain related to a third-party application, and is mainly configured to provide a plurality of data service services for a terminal device. The data network 160 may include network devices such as a server (for example, a third-party application server), a router, and a gateway.

It should be noted that FIG. 1 is merely a diagram of an example architecture of the 5G communications system. In addition to the functional units shown in FIG. 1, a network architecture of the 5G communications system may further include another functional unit or functional entity. This is not limited in this embodiment.

The 5G communications system includes a plurality of network slices. The network slice is a logical network formed by combining related service functions, network resources, and network configurations in a physical network, and can meet a specific service requirement (for example, a latency, jitter, a packet loss rate, and bandwidth in a specific range). By using network slicing, the 5G communications system can provide different service bearer capabilities for different applications (such as a game application and a chat application), to improve flexibility, service adaptability, and resource utilization of the 5G network architecture.

An application vendor (namely, a provider of an application) subscribes to a network slice service with an operator, so that when running the application, a user can communicate with a corresponding application server by using a network slice, to improve smoothness of running the application in a terminal device and improve user experience. Specifically, when subscribing to the network slice service with the operator, the application vendor negotiates with the operator to determine a quality of service rule (quality of service rule, QoS rule). The QoS rule specifies basic parameters such as bandwidth, a latency, and a packet loss rate for data transmission of a subscribed network slice. After the QoS rule is determined, a core network device of the operator generates a UE route selection policy (UE route selection policy, URSP).

The terminal device selects a corresponding network slice for the application based on the URSP, and establishes a PDU session with the network slice, so that the application communicates with the application server. The URSP includes a traffic descriptor (traffic descriptor) and a route selection descriptor (route selection descriptor).

The traffic descriptor is used to describe a feature of traffic transmitted by the terminal device, and may include any one of parameters such as an application identification (application identification, App ID), a destination internet protocol (internet protocol, IP) triplet, a data network name (data network name, DNN), and a fully qualified domain name (fully qualified domain name, FQDN) of an access destination. The App ID is used to uniquely identify an application, and the IP triplet includes a destination IP address, a destination port, and a protocol type.

The route selection descriptor is used to describe a parameter for activating the PDU session with the network slice by the terminal device, and may include parameters such as network slice selection assistance information (network slice selection assistance information, NSSAI), a DNN, and a protocol type. The NSSAI usually includes a plurality of pieces of single network slice selection assistance information (single-NSSAI, S-NSSAI), and the S-NSSAI is used to uniquely identify a single network slice. In addition, the protocol type may be a transmission control protocol (transmission control protocol, TCP), a user datagram protocol (user datagram protocol, UDP), or the like.

In some embodiments, the core network device may send a corresponding URSP to the terminal device based on subscription information of the terminal device and the operator. For example, a user may subscribe to and purchase a directional 5G network slice package by using a service center of an operator, dialing a customer service phone number of the operator, or the like. A resource in the package may include 100 GB of multi-network slice directional traffic of specified applications. These specified applications may include an application A, an application B, an application C, an application D, and the like. After the subscription succeeds, or after the terminal device successfully registers with the core network device, the core network device sends related URSPs of all specified applications in a range of the package to a terminal device corresponding to a subscribed mobile number. For example, the related URSPs may include URSPs corresponding to the application A, the application B, the application C, and the application D.

It should be noted that each application may have a plurality of URSPs. The application A is used as an example. For example, as shown in Table 1, URSPs of the application A sent by the core network include a URSP-A1, a URSP-A2, and a URSP-A3. In the URSPs of the application A, traffic descriptors are usually different, and route selection descriptors may be the same or different. For example, the traffic descriptors of the URSP-A1, the URSP-A2, and the URSP-A3 may be respectively an App ID, an IP triplet, and a DNN, and the route selection descriptors may be sequentially NSSAI 1+DNN+TCP, NSSAI 1+DNN+TCP, and NSSAI 2+DNN+TCP. The NSSAI may be a route selection list. In the route selection list, a plurality of pieces of S-NSSAI corresponding to the traffic descriptors are sequentially recorded based on different priorities. For example, as shown in Table 2, a route selection list corresponding to the NSSAI 1 sequentially includes S-NSSAI 1, S-NSSAI 2, S-NSSAI 3, S-NSSAI 4, and S-NSSAI 5 in a descending order of priorities.

**Table 1 URSP of the application A**

| URSP Name | Component | |
|---|---|---|
| | Traffic descriptor | Route selection descriptor |
| URSP-A1 | App ID | NSSAI 1+DNN+TCP |
| URSP-A2 | IP triplet | NSSAI 1+DNN+TCP |
| URSP-A3 | DNN | NSSAI 2+DNN+TCP |

**Table 2 Route selection list**

| |
|---|
| S-NSSAI 1 |
| S-NSSAI 2 |
| S-NSSAI 3 |
| S-NSSAI 4 |
| S-NSSAI 5 |

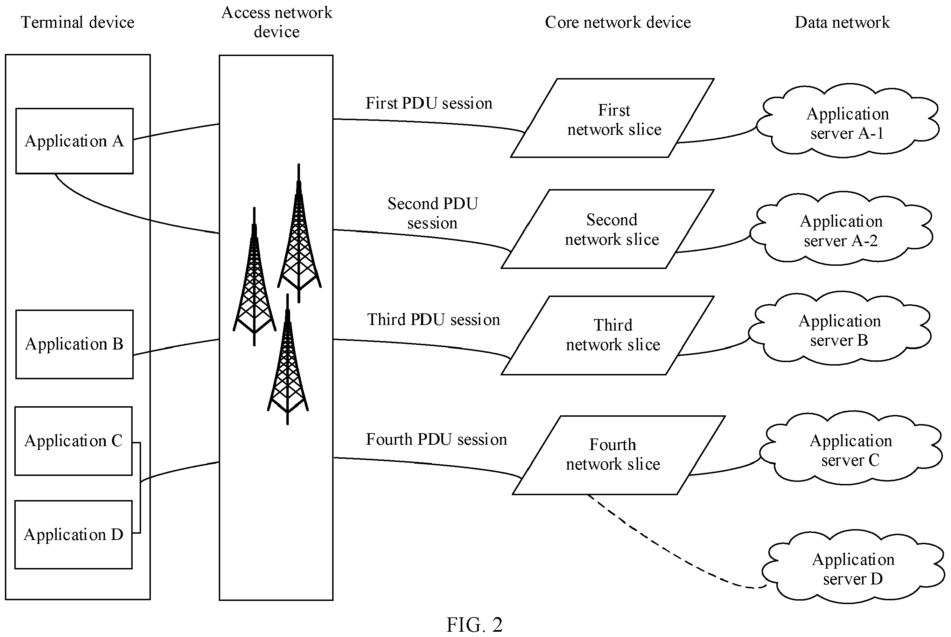

FIG. 2 is a schematic diagram of an application scenario for a network slice according to an embodiment of this application. As shown in FIG. 2, an application in a terminal device may select a corresponding network slice based on a URSP, and be connected to a corresponding application server. A network slice used by an application in the terminal device is determined based on a network slice service to which an application vendor subscribes with an operator. A correspondence between each application and a network slice may include the following (1) to (3).
(1) Different applications may be connected to different application servers by using different network slices. For example, as shown in FIG. 2, an application A may be connected to an application server A-1 by using a first network slice, and an application B is connected to an application server B by using a third network slice.
(2) A same application may be connected to different application servers by using different network slices. For example, as shown in FIG. 2, the application A may be connected to the application server A-1 by using the first network slice, or may be connected to an application server A-2 by using a second network slice.
(3) Different applications may be connected to different application servers by using a same network slice. For example, as shown in FIG. 2, an application C may be connected to an application server C by using a fourth network slice. An application D may be connected to an application server D by using the fourth network slice.

However, only after the terminal device establishes a PDU session between the terminal device and a network slice, an application can use the PDU session to communicate with an application server by using the network slice. Therefore, an embodiment of this application provides a PDU session establishment method, to establish a PDU session between a terminal device and a network slice, so as to increase a data transmission rate and improve user experience.

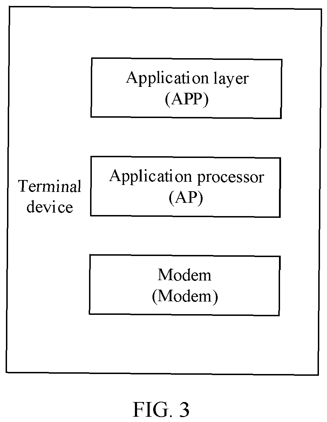

As shown in FIG. 3, the terminal device in this embodiment of this application may include an application (APP) layer, an application processor (application processor, AP), and a baseband processor (for example, a modem Modem). The application layer may include a series of application packages. The application package may include applications such as Game, Chat, Messages, Calendar, Camera, Videos, Navigation, Gallery, and Phone. The application processor is configured to provide an application programming interface (application programming interface, API) and a programming framework for each application at the application layer. The application processor may include some predefined functions, for example, a function for receiving an event sent by an application framework layer. The modem is configured to receive and send a message of another device (for example, a core network device), convert a digital signal into an analog signal through modulation at a transmit end, and convert an analog signal into a digital signal through demodulation at a receive end.

The PDU session establishment method provided in this embodiment may be divided into two phases. In a first phase, the terminal device registers with the core network device after the terminal device is powered on, a subscriber identity module (subscriber identity module, SIM) card is replaced, an airplane mode is canceled, or the like. In addition, if the terminal device has a network slice that is configured for use, the core network device sends a URSP to the terminal device after the terminal device successfully registers. In a second phase, the terminal device establishes a PDU session based on different applications. Specifically, the terminal device may execute a URSP matching policy by using the application processor, to establish the PDU session with the network slice, or may execute a URSP matching policy by using the modem, to establish the PDU session with the network slice. Details are as follows.

With reference to the terminal device shown in FIG. 3, the following describes the two phases of establishing the PDU session.

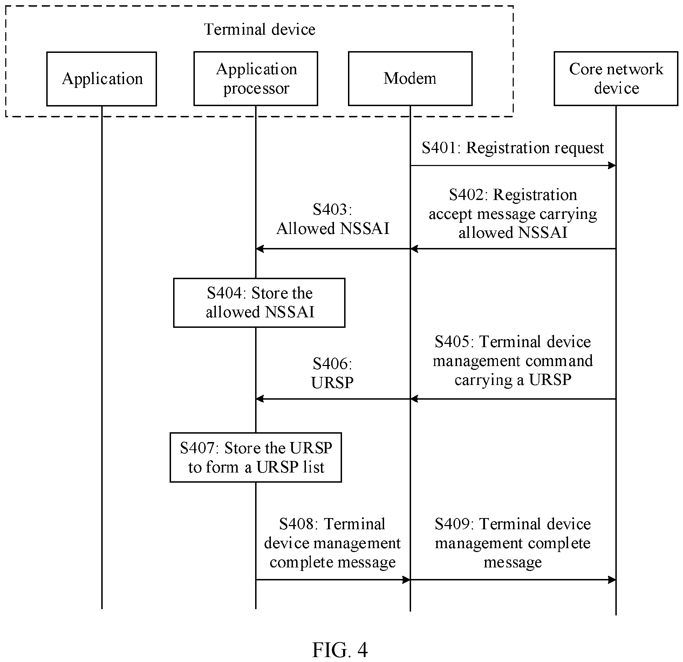

FIG. 4 is a schematic flowchart of a first phase of establishing a PDU session according to an embodiment of this application. As shown in FIG. 4, the method specifically includes the following steps S401 to S409.

S401: The modem sends a registration request to the core network device.

For example, after the terminal device is powered on, a SIM card is changed, or an airplane mode is canceled, the modem automatically sends a registration request (registration request) to the terminal device, to initiate a registration procedure to the core network device. Alternatively, after receiving a command delivered by the application processor, the modem sends the registration request to the core network device.

S402: The core network device sends a registration accept message to the modem, where the registration accept message carries allowed network slice selection assistance information (allowed NSSAI).

After receiving the registration request sent by the terminal device, the core network device sends the registration accept (Registration Accept) message to the modem of the terminal device, where the registration accept message carries the allowed NSSAI. The allowed NSSAI is NSSAI that the core network device allows the terminal device to use.

S403: The modem sends the allowed NSSAI to the application processor.

S404: The application processor stores the allowed NSSAI.

It may be understood that, with reference to a process of determining a PDU session activation parameter shown in the following steps S601 to S609, it can be learned that, after locally storing the allowed NSSAI, in a process of determining the PDU session activation parameter based on a URSP, the application processor can select, based on the allowed NSSAI, valid S-NSSAI in the URSP to establish the PDU session.

According to the foregoing steps S401 to S404, the terminal device successfully registers with the core network device. After the terminal device successfully registers with the core network device, for example, if a mobile number currently used by the terminal device subscribes to a network slice service, or some application vendors configure, for the terminal device, a network slice used for an application provided by the application vendors, the core network device continues to perform the following steps S405 to S409, to send a URSP corresponding to the network slice service to the terminal device.

S405: The core network device sends a terminal device management command (Manage UE policy command) to the modem of the terminal device, where the command carries at least one URSP.

For example, if the mobile number currently used by the terminal device subscribes to the 5G directional network slice package provided in the foregoing embodiment, the core network device may send related URSPs of all specified applications in a range of the package to the terminal device through a downlink non-access stratum transport (DL NAS Transport) channel. For example, the related URSPs may include URSPs corresponding to an application A, an application B, an application C, and an application D.

S406: The modem sends the at least one URSP to the application processor.

S407: The application processor stores the at least one URSP to form a URSP list.

Because there are a plurality of operators for the 5G communications system, the terminal device can use the network slice only when an SIM card installed on the terminal device and a network slice to be used belong to a same operator. Therefore, after receiving a URSP code stream sent by the modem, the application processor needs to perform decoding and validity check on the URSP. Performing validity check on the URSP means determining whether a PLMN identification code carried in the URSP is the same as a PLMN identification code of a SIM card that is configured for current communication by the terminal device. If the PLMN identification code carried in the URSP and the PLMN identification code of the SIM card are different, it indicates that the URSP is valid, and the URSP is stored. If the PLMN identification code carried in the URSP and the PLMN identification code of the SIM card are different, the URSP is not stored. The PLMN identification code is used to identify a belonging operator.

For example, on the basis of the fact that the mobile number currently used by the terminal device subscribes to the 5G directional network slice package provided in the foregoing embodiment, the URSP list may be shown in Table 3. The URSP list includes all URSPs delivered by the core network device to the terminal device, including the URSPs corresponding to the application A, the application B, the application C, and the application D. In the URSP list, priorities of the URSPs are ranked in descending order.

It should be noted that the URSP list includes at least a default URSP (Default URSP) of a default network slice. A traffic descriptor of the default URSP is Match All, and each application may use the default network slice.

**Table 3 URSP list**

| |
|---|
| URSP-A1 |
| URSP-A2 |
| URSP-A3 |
| URSP-B1 |
| URSP-B2 |
| ... |
| Default URSP |

S408: The application processor sends a terminal device management complete (Manage UE policy complete) message to the modem.

After storing the URSP, the application processor sends the terminal device management complete message to the modem. The terminal device management complete message is used to notify the core network device that the terminal device has responded to the terminal device management command.

S409: The modem sends the terminal device management complete message to the core network device.

Specifically, the modem may send the terminal device management complete message to the core network device through an uplink non-access stratum transport (UL NAS Transport) channel.

It should be noted that, in the foregoing process, if a URSP is checked as invalid, the application processor deletes the URSP, and the modem sends a terminal device management reject (Manage UE policy reject) message to the core network device through the UL NAS transport, to notify the core network device that the terminal device has rejected the terminal device management command.

In addition, in some embodiments, after the terminal device successfully registers with the core network device, a URSP of an application to which the terminal device subscribes may change, for example, change from a first URSP to a second URSP. If the URSP changes, the core network device sends a configuration update command (configuration update command) to the terminal device. The configuration update command may carry the first URSP and the second URSP, and is used to indicate the application processor to replace the first URSP in the URSP list with the second URSP.

The following describes a second phase of establishing a PDU session based on content of the first phase of establishing a PDU session shown in the steps S401 to S409.

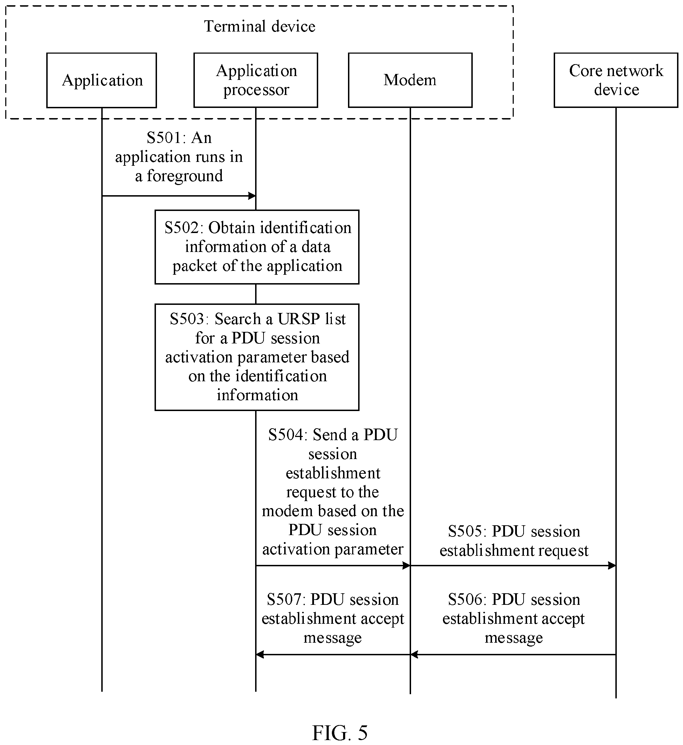

FIG. 5 is a schematic flowchart of the second phase of establishing a PDU session according to an embodiment of this application. In the method, the application processor of the terminal device executes the URSP matching policy, to control establishment of the PDU session with the network slice. The method specifically includes the following steps S501 to S506.

S501: The application processor detects, through listening, that an application runs in a foreground.

It should be understood that, in this embodiment, running of the application includes foreground running and background running.

In some embodiments, foreground running means that in a running process of the application on the terminal device, a user can currently operate and control the application. Background running means that in a running process of the application on the terminal device, a user cannot operate and control the application.

In some other embodiments, that the application runs in the foreground means that the current application is in an activity state activity state, and when the application runs in a background, the application is in an inactivity state.

S502: In response to that the application runs in the foreground, the application processor obtains identification information of a data packet of the application. For example, the identification information of the data packet may be an App ID, an IP triplet, a DNN, an FQDN, or the like.

S503: The application processor searches the URSP list for the PDU session activation parameter based on the identification information and the URSP matching policy.

After the application processor detects, through listening, that the application runs in the foreground, the application processor may select a corresponding URSP based on the URSP matching policy (refer to the following steps S601 to S609) by using the identification information, and select the PDU session activation parameter from the URSP, to activate a corresponding PDU session based on the PDU session activation parameter in the following step.

S504: The application processor sends a PDU session establishment request to the modem based on the PDU session activation parameter.

Because different applications may use a same network slice, a network slice corresponding to the PDU session activation parameter may have been activated, that is, a PDU session between the terminal device and the network slice has been established. Therefore, in a possible implementation, before sending the PDU session establishment request to the modem based on the PDU session activation parameter, the application processor may first determine whether activation of the network slice corresponding to the PDU session activation parameter has succeeded. If the activation succeeds, activation is not required again, to avoid a repeated operation. If the activation fails, the PDU session establishment request is sent to the modem based on the PDU session activation parameter, to activate the network slice. It should be noted that activating the network slice means establishing the PDU session between the terminal device and the network slice.

The PDU session establishment request (PDU session establishment request) carries the PDU session activation parameter, to request to activate a PDU session in a network slice corresponding to the PDU session activation parameter. For example, when the PDU session activation parameter is S-NSSAI 1, the PDU session establishment request is used to request to activate a PDU session in a network slice whose identification is S-NSSAI 1.

S505: The modem sends the PDU session establishment request to the core network device.

S506: The core network device sends a PDU session establishment accept message to the modem.

The PDU session establishment accept (PDU session establishment accept) message carries a PDU session activation parameter, and is used to indicate that the PDU session in the network slice corresponding to the PDU session activation parameter has been activated. For example, when the PDU session activation parameter includes S-NSSAI 1, the PDU session establishment accept message is used to indicate that the PDU session in the network slice corresponding to S-NSSAI 1 has been activated.

S507: The modem sends the PDU session establishment accept message to the application processor.

According to the foregoing steps S501 to S507, the terminal device may execute the URSP matching policy by using the application processor based on the identification information of the data packet of the application, to establish the PDU session with the network slice. After the PDU session is activated, the application processor routes and binds, to the PDU session, a data packet including the identification information. Then, the data packet including the identification information may be transmitted by using the PDU session, so that the application communicates with an application server by using the network slice.

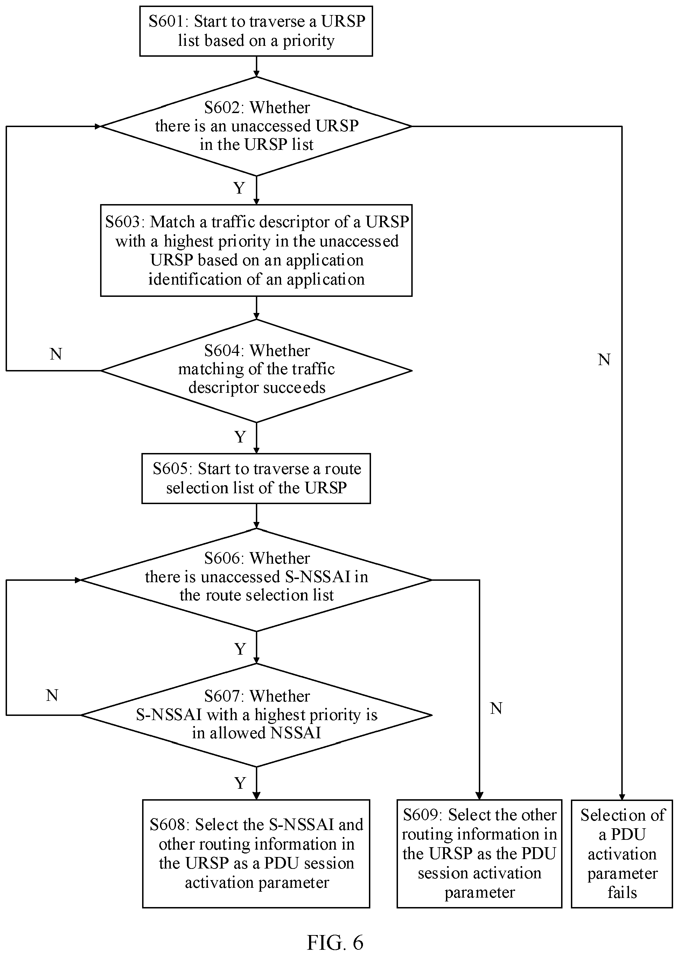

FIG. 6 is a schematic flowchart of a URSP matching policy according to an embodiment of this application. FIG. 6 describes a process of searching the URSP list for the PDU session activation parameter based on the identification information of the data packet and the URSP matching policy in the foregoing step S503. The URSP matching policy may be applied to an application processor, or may be applied to a modem. Specifically, the following steps S601 to S608 are included.

S601: Start to traverse the URSP list based on a priority.

S602: Determine whether there is an unaccessed URSP in the URSP list. If there is no unaccessed URSP, selection of the PDU activation parameter fails. If there is an unaccessed URSP, a next step S603 is performed.

S603: Match a traffic descriptor of a URSP with a highest priority in the unaccessed URSP based on the identification information. For example, if in the unaccessed URSP, the URSP with the highest priority is a URSP-A1 and a traffic descriptor of the URSP-A1 includes an App ID, matching is performed between an App ID of the application and the traffic descriptor.

S604: Determine whether matching of the traffic descriptor succeeds.

Specifically, if the App ID of the application and a traffic descriptor of a currently accessed URSP are different, the matching of the traffic descriptor fails, and the step S602 is performed. If the App ID of the application and a traffic descriptor of a currently accessed URSP are the same, matching of the traffic descriptor succeeds. This indicates that selection of a URSP succeeds, and a next step S605 is performed.

S605: Start to traverse a route selection list (route selection list) of the URSP based on a priority.

S606: Determine whether there is unaccessed S-NSSAI in the route selection list.

Specifically, if there is unaccessed S-NSSAI in the route selection list, a next step S607 is performed. If there is no unaccessed S-NSSAI in the route selection list, a step S609 is performed.

S607: Determine whether S-NSSAI with a highest priority in the unaccessed S-NSSAI is in allowed NSSAI list.

Specifically, if the S-NSSAI with the highest priority in the unaccessed S-NSSAI is not in the allowed NSSAI list, the step S606 is performed. If the S-NSSAI with the highest priority is in the allowed NSSAI list, a next step S608 is performed.

S608: Select the S-NSSAI and other routing information in the currently accessed URSP as the PDU session activation parameter.

In this embodiment, the other routing information is information other than NSSAI in a route selection descriptor, for example, a DNN and a protocol type. For example, an operator of a network slice is China Mobile. A DNN of the network slice is cmnet, and a protocol type of the network slice may be a TCP protocol, a UDP protocol, or the like.

S609: Select another route selection descriptor in the currently accessed URSP as the PDU session activation parameter. It should be noted that, because the terminal device does not select the S-NSSAI, the terminal device uses a default network slice based on the information such as the DNN and the protocol type.

The PDU session activation parameter corresponding to the identification information may be selected by using the foregoing steps S601 to S609.

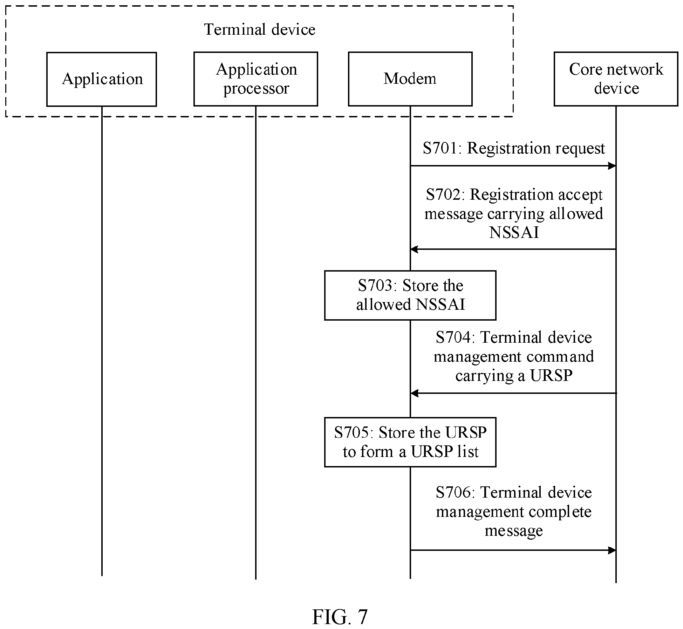

FIG. 7 is a schematic flowchart of a first phase of establishing a PDU session according to another embodiment of this application. As shown in FIG. 7, the method specifically includes the following steps S701 to S706.

S701: The modem sends a registration request to the core network device.

For example, after the terminal device is powered on, the SIM card is changed, or the airplane mode is canceled, the modem automatically sends the registration request (registration request) to the terminal device, to initiate a registration procedure to the core network device. Alternatively, after receiving a command delivered by the application processor, the modem sends the registration request to the core network device.

S702: The core network device sends a registration accept message to the modem, where the message carries allowed NSSAI.

For specific content of the step S702, refer to S402. Details are not described herein again in this embodiment.

S703: The modem stores the allowed NSSAI.

It may be understood that, with reference to the process of determining the PDU session activation parameter shown in the foregoing steps S601 to S609, it can be learned that, after locally storing the allowed NSSAI, in a process of determining the PDU session activation parameter based on a URSP, the modem can select, based on the allowed NSSAI, valid S-NSSAI in the URSP to establish the PDU session.

According to the foregoing steps S701 to S703, the terminal device successfully registers with the core network.

After the terminal device successfully registers with the core network device, for example, if a mobile number currently used by the terminal device subscribes to a network slice service, or some application vendors configure, for the terminal device, a network slice used for an application provided by the application vendors, the core network device continues to perform the following steps S704 to S706, to send a URSP corresponding to the network slice service to the terminal device.

S704: The core network device sends a terminal device management command to the modem, where the command carries at least one URSP.

In this embodiment, the core network may send the terminal device management command through a downlink non-access stratum transport (DL NAS Transport) channel, to transport a related URSP to the terminal device.

S705: The modem stores the at least one URSP to form a URSP list.

Specifically, after receiving a URSP code stream delivered by the application processor, the modem performs decoding and validity check on the URSP, and stores the URSP after the URSP is checked to be valid, to form the URSP list. For specific content of the validity check, refer to the step S407. Details are not described herein again in this embodiment.

S706: The modem sends a terminal device management complete message to the core network device.

Specifically, the modem may send the terminal device management complete message to the core network device through an uplink non-access stratum transport (UL NAS Transport) channel.

It may be understood that, only after locally storing the URSP list, the baseband processor can locally perform a URSP matching policy based on identification information of an application and the URSP list, to establish the PDU session.

Compared with the procedure of the first phase of establishing a PDU session shown in the steps S401 to S409, the procedure shown in the steps S701 to S706 is simpler. In the steps S701 to S706, after obtaining parameters such as the allowed NSSAI and the URSP, the modem directly stores the parameters locally without forwarding the parameters to the application processor. This helps improve registration and URSP delivery efficiency.

It should be noted that, in a process in which the terminal device registers with the core network, if the URSP is checked to be invalid, the modem deletes the URSP, and sends a terminal device management reject message to the core network device.

In addition, in some embodiments, after the terminal device successfully registers with the core network, the URSP of the terminal device may change, for example, change from a first URSP to a second URSP. If the URSP changes, the core network device sends a configuration update command (configuration update command) to the terminal device. The configuration update command may carry the first URSP and the second URSP, and is used to indicate the modem to replace the first URSP in the URSP list with the second URSP.

The following describes a second phase of establishing a PDU session based on content of the first phase of establishing a PDU session shown in the steps S701 to S706.

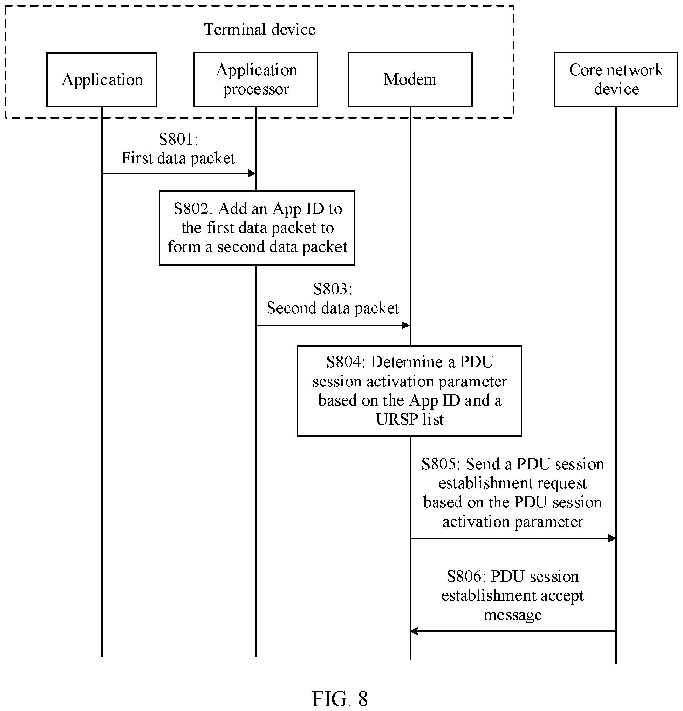

FIG. 8 is a schematic flowchart of the second phase of establishing a PDU session according to another embodiment of this application. FIG. 8 describes a process in which a modem side performs the URSP matching policy and establishes the PDU session. The process specifically includes the following steps S801 to S807.

S801: An application sends a first data packet to the application processor.

In a running process, the application usually generates a plurality of first data packets, and sends the first data packets to the application processor.

S802: The application processor adds an App ID to the first data packet to form a second data packet.

The application processor adds an App ID to each received first data packet, to identify an application to which the first data packet belongs.

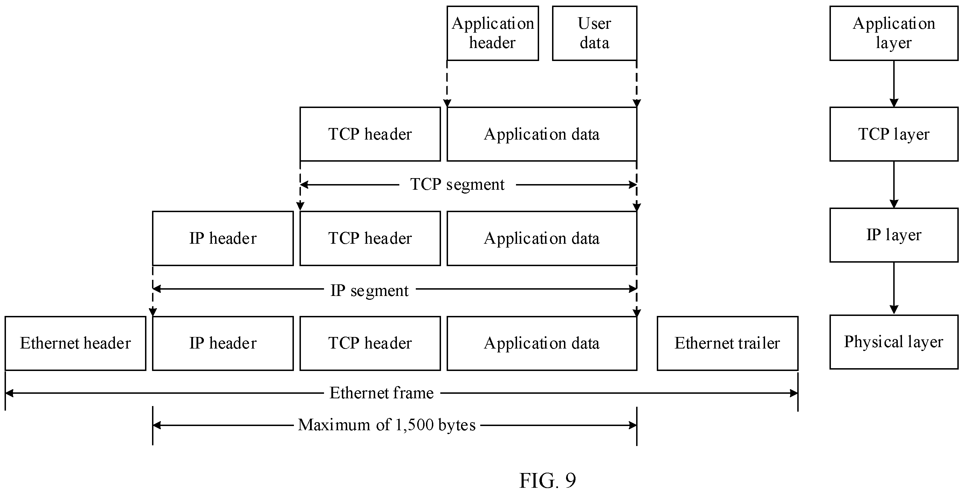

As shown in FIG. 9, a software system architecture of a terminal device may include an application layer, a TCP layer, an IP layer, and a physical layer. In the terminal device, user data generated in the running process of the application may be transmitted to the core network device sequentially by using the application layer, the TCP layer, the IP layer, and the physical layer. First, the application layer adds an application header to the user data to form application data, and sends the application data to the TCP layer. Second, the TCP layer adds a TCP header to the application data to form a TCP segment. Then, the IP layer adds an IP header to the TCP segment to form an IP data packet. A maximum size of the IP data packet is 1,500 bytes. Finally, the physical layer adds an Ethernet (Ethernet) header and an Ethernet trailer to the IP data packet to form an Ethernet frame. In this embodiment, the application processor may add the App ID to an invalid field at the Ethernet header or Ethernet trailer of the data packet. The invalid field is a field that is not occupied.

It may be understood that the application processor adds identification information to the invalid field at the Ethernet header or the Ethernet trailer of the first data packet, to avoid adding a new field to the first data packet.

S803: The application processor sends the second data packet to the modem.

S804: The modem searches the URSP list for a PDU session activation parameter based on the App ID and the URSP matching policy.

For specific content of searching the URSP list for the PDU session activation parameter based on the App ID and the URSP matching policy in the step S804, refer to the steps S601 to S609. Details are not described herein again in this embodiment.

S805: The modem sends a PDU session establishment request (PDU session establishment request) to the core network device based on the PDU session activation parameter.

Because different applications are installed on the terminal device, these applications may use a same network slice to access a same server. Therefore, the applications may have a same PDU session activation parameter. Therefore, in this embodiment, when sending the PDU session establishment request to the terminal device based on the PDU session activation parameter, the modem first determines whether an established PDU session includes a PDU session established based on the PDU session activation parameter. If the PDU session does not exist, the modem sends the PDU session establishment request to the core network device, to establish the PDU session. If the PDU session exists, the modem does not repeatedly establish the PDU session based on the PDU session activation parameter, and transmits the second data packet by using the established PDU session.

The PDU session establishment request carries the PDU session activation parameter, to request to activate a PDU session in a network slice corresponding to the PDU session activation parameter. For example, when the PDU session activation parameter includes S-NSSAI 1, the PDU session establishment request is used to request to activate a PDU session in a network slice whose identification is S-NSSAI 1.

S806: The core network device sends a PDU session establishment accept message to the modem.

The PDU session establishment accept (PDU session establishment accept) message carries a PDU session activation parameter, and is used to indicate that the PDU session in the network slice corresponding to the PDU session activation parameter has been activated. For example, when the PDU session activation parameter includes S-NSSAI 1, the PDU session establishment accept message is used to indicate that the PDU session in the network slice corresponding to S-NSSAI 1 has been activated.

After the PDU session is activated, the modem routes and binds, to the PDU session, a data packet including the App ID. Then, the data packet including the App ID may be transmitted by using the PDU session, so that the application communicates with an application server by using the network slice.

A person skilled in the art may understand that, the first data packet sent by the application to the application processor usually first reaches the modem through the application processor, then is sent by the modem to the core network device, and finally is sent by the core network device to the application server. Because the first data packet sent by the application may not include identification information of the application, the modem may not, based on the identification information of the application, be able to perform URSP matching selection and establish the PDU session.

However, in this embodiment, the application processor first adds the identification information of the application to each first data packet of the application to form the second data packet, and then sends the second data packet to the modem. Then, the modem can obtain the identification information of the application, determine a corresponding URSP from the URSP list based on the identification information, and establish the PDU session based on the URSP. Therefore, in the PDU session establishment method provided in this embodiment, the modem may perform URSP matching selection and establish the PDU session, to provide a data transmission channel for the application and the application server.

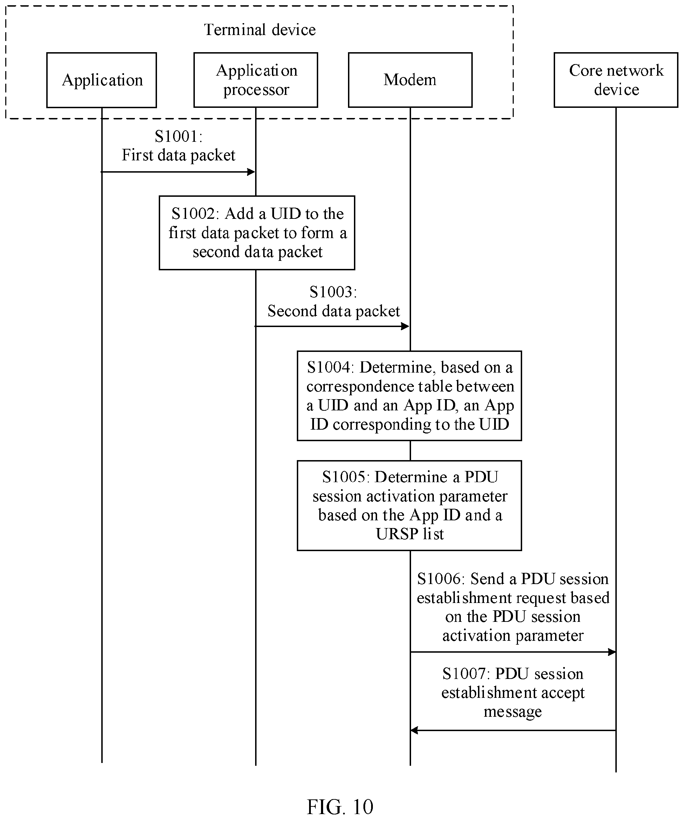

FIG. 10 is a schematic flowchart of the second phase of establishing a PDU session according to still another embodiment of this application. FIG. 10 describes a process in which the modem performs the URSP matching policy to establish the PDU session with the network slice. The process includes the following steps S1001 to S1007.

It should be noted that, before the second phase of establishing a PDU session provided in this embodiment, the terminal device also needs to perform the procedure of the first phase of establishing a PDU session shown in the steps S701 to S706. Details are not described herein again in this embodiment. In addition, the application processor further needs to send a correspondence table between a user identification (User Identification, UID) and an App ID of each application to the modem for storage, and the modem forwards the table to the core network device. The UID is used to uniquely identify an account of an application, and may be a registered mobile number, a registered email address, a registered identity card number, an account identification (Identification, ID) allocated by an application server, or the like of the account.

S1001: An application sends a first data packet to the application processor.

In a running process, the application usually generates a plurality of first data packets, and sends the first data packets to the application processor.

S1002: The application processor adds a UID to the first data packet to form a second data packet.

In this embodiment, for a method for adding the UID to the first data packet by the application processor, refer to the method for adding the App ID to the first data packet by the application processor in the step S802, and details are not described herein again in this embodiment.

S1003: The application processor sends the second data packet to the modem.

S1004: The modem determines, based on a preset correspondence table, an App ID corresponding to the UID.

For example, a correspondence table between a UID and an App ID may be shown in Table 4. For example, a UID-A of an application A corresponds to an App ID-A. A UID-B of an application B corresponds to an App ID-B.

**Table 4 Correspondence table**

| UID | App ID |
|---|---|
| UID-A | App ID-A |
| UID-B | App ID-B |
| UID-C | App ID-C |
| UID-D | App ID-D |
| ... | ... |

S1005: The modem searches the URSP list for a PDU session activation parameter based on the App ID and the URSP matching policy.

S1006: The modem sends a PDU session establishment request to the core network device based on the PDU session activation parameter.

S1007: The core network device sends a PDU session establishment accept message to the modem.

For content of the steps S 1005 to S 1007, refer to the steps S804 to S806. Details are not described herein again in this embodiment.

In this embodiment, the terminal device may execute the URSP matching policy by using the modem by using the UID, to establish the PDU session with the network slice. After the PDU session is activated, the modem routes and binds, to the PDU session, a data packet including the UID. Then, the data packet including the UID may be transmitted by using the PDU session, so that the application communicates with the application server by using the network slice.

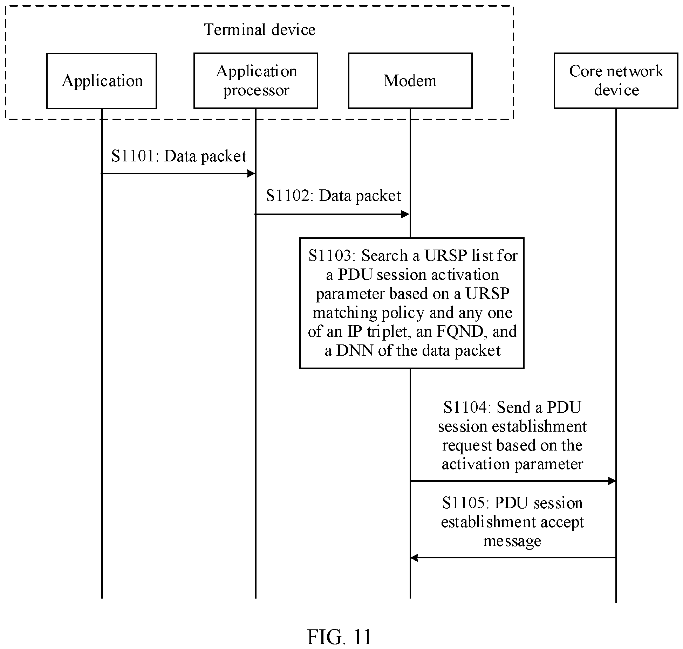

FIG. 11 is a schematic flowchart of the second phase of establishing a PDU session according to some other embodiments of this application. FIG. 11 describes a process in which the modem executes the URSP matching policy in the modem based on an IP triplet, an FQND, or a DNN, and establishes the PDU session. The process includes the following steps S1101 to S1105.

S1101: An application sends a data packet to the application processor.

S1102: The application processor sends the data packet to the modem.

S1103: The modem searches the URSP list for a PDU session activation parameter based on the URSP matching policy and any one of an IP triplet, an FQND, and a DNN of the data packet.

For a process of determining the PDU session activation parameter based on any one of the IP triplet, the FQND, and the DNN, refer to the process of determining the PDU session activation parameter based on the identification information shown in the steps S601 to S608. Details are not described herein again in this embodiment.

S1104: The modem sends a PDU session establishment request to the core network device based on the PDU session activation parameter.

S1105: The core network device sends a PDU session establishment accept message to the modem.

For the steps S1104 and S1105, refer to the steps S805 and S806. Details are not described herein again in this embodiment.

In this embodiment, the terminal device may execute the URSP matching policy by using the modem based on the IP triplet, the FQND, or the DNN, to establish the PDU session with the network slice. After the PDU session is activated, the modem routes and binds, to the PDU session, the data packet including the IP triplet, the FQND, or the DNN, so that the application communicates with an application server by using the network slice.

It should be understood that sequence numbers of the steps do not mean execution sequences in the foregoing embodiments. The execution sequences of the processes should be determined based on functions and internal logic of the processes, but should not be construed as any limitation on implementation processes of embodiments of this application.

Based on the PDU session establishment method provided in the foregoing embodiment, an embodiment further provides a terminal device. The terminal device includes an application processor and a baseband processor. The baseband processor stores a UE route selection policy URSP list, and the URSP list includes at least one URSP. The application processor is configured to: obtain a first data packet of an application; add identification information of the application to the first data packet to form a second data packet; and send the second data packet to the baseband processor. The baseband processor is configured to: search the URSP list for a URSP corresponding to the identification information; determine a PDU session activation parameter based on the URSP corresponding to the identification information; and establish a PDU session based on the PDU session activation parameter, where the PDU session is used to transmit the second data packet.

In some embodiments, the identification information is an application identification App ID or a user identification UID.

In some embodiments, if the identification information is the App ID, that the baseband processor searches the URSP list for a URSP corresponding to the identification information includes: The baseband processor searches the URSP list for a URSP corresponding to the App ID.

In some embodiments, if the identification information is the UID, that the baseband processor searches the URSP list for a URSP corresponding to the identification information includes: The baseband processor determines, based on a preset correspondence table, an App ID corresponding to the UID, where the correspondence table includes a correspondence between the UID and the App ID; and the baseband processor searches the URSP list for a URSP corresponding to the App ID.

In some embodiments, that the application processor adds identification information of the application to the first data packet to form a second data packet specifically includes: The application processor adds the identification information of the application to an unoccupied field at an Ethernet header or an Ethernet trailer of the first data packet, to form the second data packet.

In some embodiments, before that the application processor obtains a first data packet of an application, the baseband processor is further configured to: send a registration request to a core network device; receive a registration accept message sent by the core network device, where the registration accept message carries network slice selection assistance information (allowed NSSAI) that the core network device allows the terminal device to use; and store the allowed NSSAI.

In some embodiments, after that the baseband processor stores the allowed NSSAI, and before that the application processor obtains a first data packet sent by an application, the baseband processor is further configured to: receive a terminal device management command sent by the core network device, where the command carries a URSP; store the at least one URSP to form a URSP list; and send a terminal device management complete message to the core network device, where the message is used to indicate that the baseband processor has processed the terminal device management command.

In some embodiments, the PDU session activation parameter includes single network slice selection assistance information S-NSSAI, a data network name DNN, and a protocol type, and the S-NSSAI is included in allowed network slice selection assistance information (allowed NSSAI).

In some embodiments, the baseband processor is further configured to: receive a configuration update command sent by the core network device, where the configuration update command carries a first URSP and a second URSP, and the second URSP is an updated URSP of the first URSP; and replace the first URSP in the URSP list with the second URSP based on the configuration update command.

In some embodiments, that the baseband processor establishes a PDU session based on the PDU session activation parameter includes: The baseband processor determines an established PDU session; and if the established PDU session does not include the PDU session established based on the PDU session activation parameter, the baseband processor establishes the PDU session based on the PDU session activation parameter.

In some embodiments, the baseband processor is a modem.

An embodiment of this application further provides a chip system. The chip system includes a memory, an application processor and a baseband processor that are coupled to the memory. The application processor and the baseband processor execute a computer program stored in the memory, to implement the PDU session establishment method provided in the foregoing embodiment.

An embodiment of this application further provides a computer-readable storage medium. The computer-readable storage medium stores a computer program. When the computer program is executed by an application processor and a baseband processor, the PDU session establishment method provided in the foregoing embodiment is implemented.

It should be understood that the computer-readable medium in this embodiment may include at least any entity or apparatus that can carry the computer program code to a terminal device, a recording medium, a computer memory, a read-only memory (ROM, Read-Only Memory), a random access memory (RAM, Random Access Memory), an electrical carrier signal, a telecommunication signal, and a software distribution medium, for example, a USB flash drive, a removable hard disk, a magnetic disk, or an optical disk. In some jurisdictions, the computer-readable medium cannot be the electrical carrier signal or the telecommunication signal according to legislation and patent practices.

An embodiment of this application further provides a computer program product. When the computer program product runs on a terminal device, the terminal device is enabled to perform the PDU session establishment method provided in the foregoing embodiment. The computer program includes computer program code. The computer program code may be in a source code form, an object code form, an executable file form, some intermediate forms, or the like.

It may be clearly understood by a person skilled in the art that, for the purpose of convenient and brief description, for a detailed working process of the foregoing network slice management system, application server, and terminal device, refer to a corresponding process in the foregoing method embodiments. Details are not described herein again.

It should be understood that in the descriptions of the specification and appended claims of this application, the terms "first", "second", "third", and the like are merely used for distinguishing and description, and cannot be understood as an indication or implication of relative importance.

Referring to "an embodiment", "some embodiments", or the like in the specification of this application indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

In conclusion, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A PDU session establishment method, applied to a terminal device comprising an application processor and a baseband processor, wherein the baseband processor stores a UE route selection policy URSP list, and the URSP list comprises at least one URSP; and the method comprises:
obtaining, by the application processor, a first data packet of an application;
adding identification information of the application to the first data packet to form a second data packet; and
sending the second data packet to the baseband processor; and
searching, by the baseband processor, the URSP list for a URSP corresponding to the identification information;
determining a protocol data unit PDU session activation parameter based on the URSP corresponding to the identification information; and
establishing a PDU session based on the PDU session activation parameter, wherein the PDU session is used to transmit the second data packet.

2. The method according to claim 1, wherein the identification information is an application identification App ID or a user identification UID.

3. The method according to claim 2, wherein if the identification information is the App ID, the searching, by the baseband processor, the URSP list for a URSP corresponding to the identification information comprises:
searching, by the baseband processor, the URSP list for a URSP corresponding to the App ID.

4. The method according to claim 2, wherein if the identification information is the UID, the searching, by the baseband processor, the URSP list for a URSP corresponding to the identification information comprises:
determining, by the baseband processor based on a preset correspondence table, an App ID corresponding to the UID, wherein the correspondence table comprises a correspondence between the UID and the App ID; and
searching the URSP list for a URSP corresponding to the App ID.

5. The method according to any one of claims 1 to 4, wherein the adding, by the application processor, identification information of the application to the first data packet to form a second data packet comprises:
adding, by the application processor, the identification information to an unoccupied field at an Ethernet header or an Ethernet trailer of the first data packet, to form the second data packet.

6. The method according to any one of claims 1 to 5, wherein before the obtaining, by the application processor, a first data packet of an application, the method further comprises:
sending, by the baseband processor, a registration request to a core network device;
receiving a registration accept message sent by the core network device, wherein the registration accept message carries network slice selection assistance information allowed NSSAI that the core network device allows the terminal device to use; and
storing the allowed NSSAI.

7. The method according to claim 6, wherein after the storing, by the baseband processor, the allowed NSSAI, and before the obtaining, by the application processor, a first data packet sent by an application, the method further comprises:
receiving, by the baseband processor, a terminal device management command sent by the core network device, wherein the command carries at least one URSP;
storing the at least one URSP to form a URSP list; and
sending a terminal device management complete message to the core network device, wherein the message is used to indicate that the baseband processor has processed the terminal device management command.

8. The method according to claim 6 or 7, wherein the PDU session activation parameter comprises single network slice selection assistance information S-NSSAI, a data network name DNN, and a protocol type, and the S-NSSAI is comprised in the allowed NSSAI.

9. The method according to any one of claims 1 to 8, wherein the method further comprises:
receiving, by the baseband processor, a configuration update command sent by the core network device, wherein the configuration update command carries a first URSP and a second URSP, and the second URSP is an updated URSP of the first URSP; and
replacing the first URSP in the URSP list with the second URSP based on the configuration update command.

10. The method according to any one of claims 1 to 9, wherein the establishing, by the baseband processor, a PDU session based on the PDU session activation parameter comprises:
if an established PDU session does not comprise the PDU session established based on the PDU session activation parameter, establishing, by the baseband processor, the PDU session based on the PDU session activation parameter.

11. The method according to any one of claims 1 to 10, wherein the baseband processor is a modem.

12. A terminal device, comprising an application processor and a baseband processor, wherein the baseband processor stores a UE route selection policy URSP list, and the URSP list comprises at least one URSP;
the application processor is configured to:
obtain a first data packet of an application;
add identification information of the application to the first data packet to form a second data packet; and
send the second data packet to the baseband processor; and
the baseband processor is configured to:
search the URSP list for a URSP corresponding to the identification information;
determine a protocol data unit PDU session activation parameter based on the URSP corresponding to the identification information; and
establish a PDU session based on the PDU session activation parameter, wherein the PDU session is used to transmit the second data packet.

13. The terminal device according to claim 12, wherein the identification information is an application identification App ID or a user identification UID.

14. The terminal device according to claim 13, wherein if the identification information is the App ID, that the baseband processor searches the URSP list for a URSP corresponding to the identification information comprises:
searching, by the baseband processor, the URSP list for a URSP corresponding to the App ID.

15. The terminal device according to claim 13, wherein if the identification information is the UID, that the baseband processor searches the URSP list for a URSP corresponding to the identification information comprises:
determining, by the baseband processor based on a preset correspondence table, an App ID corresponding to the UID, wherein the correspondence table comprises a correspondence between the UID and the App ID; and
searching the URSP list for a URSP corresponding to the App ID.

16. The terminal device according to any one of claims 12 to 15, wherein that the application processor adds identification information of the application to the first data packet to form a second data packet specifically comprises:
adding, by the application processor, the identification information to an unoccupied field at an Ethernet header or an Ethernet trailer of the first data packet, to form the second data packet.

17. The terminal device according to any one of claims 12 to 16, wherein before that the application processor obtains a first data packet of an application, the baseband processor is further configured to:
send a registration request to a core network device;
receive a registration accept message sent by the core network device, wherein the registration accept message carries network slice selection assistance information allowed NSSAI that the core network device allows the terminal device to use; and
store the allowed NSSAI.

18. The terminal device according to claim 17, wherein after that the baseband processor stores the allowed NSSAI, and before that the application processor obtains a first data packet sent by an application, the baseband processor is further configured to:
receive a terminal device management command sent by the core network device, wherein the command carries at least one URSP;
store the at least one URSP to form a URSP list; and
send a terminal device management complete message to the core network device, wherein the message is used to indicate that the baseband processor has processed the terminal device management command.

19. The terminal device according to claim 17 or 18, wherein the PDU session activation parameter comprises single network slice selection assistance information S-NSSAI, a data network name DNN, and a protocol type, and
the S-NSSAI is comprised in the allowed NSSAI.

20. The terminal device according to any one of claims 12 to 19, wherein the baseband processor is further configured to:
receive a configuration update command sent by the core network device, wherein the configuration update command carries a first URSP and a second URSP, and the second URSP is an updated URSP of the first URSP; and
replace the first URSP in the URSP list with the second URSP based on the configuration update command.

21. The terminal device according to any one of claims 12 to 20, wherein that the baseband processor establishes a PDU session based on the PDU session activation parameter comprises:
if an established PDU session does not comprise the PDU session established based on the PDU session activation parameter, establishing, by the baseband processor, the PDU session based on the PDU session activation parameter.

22. The terminal device according to any one of claims 12 to 21, wherein the baseband processor is a modem.

23. A chip system, wherein the chip system comprises a memory, and an application processor and a baseband processor that are coupled to the memory, and the application processor and the baseband processor execute a computer program stored in the memory, to implement the protocol data unit PDU session establishment method according to any one of claims 1 to 11.

24. A computer-readable storage medium, wherein the computer-readable storage medium stores a computer program, and when the computer program is executed by an application processor and a baseband processor, the protocol data unit PDU session establishment method according to any one of claims 1 to 11 is implemented.

25. A computer program product, wherein when the computer program product runs on a terminal device, the terminal device is enabled to perform the protocol data unit PDU session establishment method according to any one of claims 1 to 11.
